# EUROPEAN PATENT SPECIFICATION

(11) **EP 2 768 152 B1**
(45) Date of publication and mention of the grant of the patent: **02.01.2019**
(21) Application number: 12840104.9
(22) Date of filing: 28.05.2012
(51) Int. Cl.: H04B 1/7103, H04B 1/7115

(54) **FINGER ALIGNED ACCUMULATION METHOD AND DEVICE**
AN FINGERN AUSGERICHTETES AKKUMULATIONSVERFAHREN UND VORRICHTUNG DAFÜR
PROCÉDÉ ET DISPOSITIF D'ACCUMULATION ALIGNÉ SUR LES DENTS

(30) Priority: 13.10.2011 CN 201110309616
(43) Date of publication of application: 20.08.2014
(73) Proprietor: ZTE Corporation, Shenzhen, Guangdong 518057 (CN); Sanechips Technology Co., Ltd., Shenzhen, Guangdong 518055 (CN)
(72) Inventor: ZHANG, Linsheng, Shenzhen Guangdong 518057 (CN); FENG, Liguo, Shenzhen Guangdong 518057 (CN); HONG, Sihua, Shenzhen Guangdong 518057 (CN)
(74) Representative: Lavoix
(86) International application number: PCT/CN2012/076180
(87) International publication number: WO 2013/053236

(56) References cited:
- CN-A- 1 347 216
- CN-A- 1 459 939
- US-A1- 2001 046 205
- US-A1- 2004 240 528
- US-A1- 2005 013 350
- US-A1- 2011 182 330

## Description

### TECHNICAL FIELD

The disclosure relates to the field of communication technology, and in particular to a method and device for finger aligned accumulation during interference cancellation in a Wideband Code Division Multiple Access (WCDMA) system.

### BACKGROUND

WCDMA is one of air interface standards of third-generation mobile communications. WCDMA belongs to spread spectrum communications, which adopts technologies such as bidirectional closed-loop power control, transmission and reception diversity, RAKE reception against multipath fading, channel coding and decoding with convolutional codes and Turbo codes.

In a WCDMA system, a mobile communication channel differs a lot from a fixed communication channel. After being transmitted by an antenna of a transmitter, electromagnetic waves may arrive at and be received by an antenna of a moving WCDMA baseband receiver directly, or after delayed propagation via multiple paths of reflection, diffraction and the like. Therefore, a signal received by the receiver has multiple finger delays. Such finger results interfere with each other, leading to multipath fading of a wireless channel.

At a WCDMA baseband receiver side, each of distinguishable finger components in a received signal is tracked and received respectively using pilot PN code correlation to output a baseband signal and perform path merging, by way of so-called RAKE correlation reception, where correlation demodulation is performed respectively on each finger with correlation demodulators referred to as RAKE fingers. Outputs of these RAKE fingers are then merged and sent into a channel decoder for subsequent processing. With RAKE correlation reception, transmit power received increases equivalently by using finger components, thus achieving resistance to multipath fading.

In a WCDMA receiving system, finger data are reconstructed using finger offset information obtained through RAKE reception and user symbols correctly demodulated and decoded in combination with a channel estimation, to recover amplitude and phase information in the finger data when the finger data arrive at a receiver side after propagating in a wireless channel. The reconstructed finger data are then aligned to system timing of original antenna data before accumulation. Final accumulated data are subtracted from the original antenna data to cancel impact of such known user fingers on an unknown user finger (yet to be demodulated and decoded correctly) so as to increase a possibility of correctly demodulating and decoding a remaining unknown user finger. This is referred to as interference cancellation.

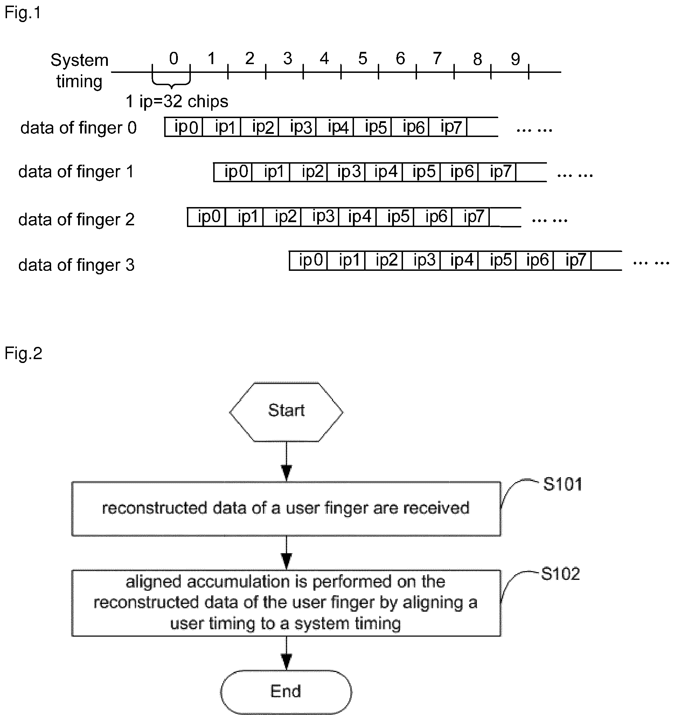

Fig.1 is a schematic diagram of offsets of data of four user fingers with respect to system timing (also referred to as offsets of user timings with respect to system timing). Specifically, a configurable correlation length is represented by an ip, which is equal to a correlation length of 32 chips (32-chip is taken as an example herein, while the correlation length is configurable); ip0 to ip7 represent respectively practical offsets of a certain finger with respect to system timing when a transmitter transmits a signal. E.g., all ip0s of the 4 fingers are transmitted at system timing ip0. The 8 ips of ip0 to ip7 amount to 256 chips, which is taken as an example herein to represent a finger accumulation length, which is also configurable; and each finger is accumulated in series. Alignment of these fingers to system timing and accumulation have to be performed in sequence: first, data saved at a location corresponding to a finger offset are read; then, accumulation is performed; finally accumulated data are saved back to the location corresponding to the finger offset. A solution for increasing alignment efficiency and preventing an accumulation conflict has to be found in aligning finger data to system timing and accumulating.

In an existing solution for finger aligned accumulation, aligned accumulation can be performed on only a minimal unit, such as 1 chip or 4 chips, of finger data in one clock cycle, leading to low efficiency in aligned accumulation; moreover, no solution in pipeline design is available for preventing a conflict in accessing or reading/writing a Random Access Memory (RAM)for aligned accumulation of two successive fingers.

US 2004/0240528 A1 discloses techniques for polling fingers on a channel (which are fingers for which symbols are to be combined) to determine the last finger on the channel. As each finger is polled, the polled finger compares its state information with the state information for the channel to determine whether or not it is the last finger on the channel. The polled finger may be deemed as the last finger if (1) the polled finger is the current last finger, (2) the polled finger is later than the current last finger, or (3) all fingers on the channel have been polled and none of the fingers indicated that it is the last finger. If the polled finger is deemed as the last finger then, (1) the channel state information is updated with the polled finger state information, and (2) the symbols provided by the polled finger may be marked as being ready for subsequent processing.

US 2005/013350 A1 discloses a sample buffer within a rake receiver including a single high-speed processor to process several multipaths in a time division manner, which simulates functions of several finger processors.

### SUMMARY

It is desired that embodiments of the disclosure provide a method and device for finger aligned accumulation, capable of increasing efficiency in finger aligned accumulation of a WCDMA system and preventing a conflict in accessing or reading/writing a RAM for aligned accumulation of two successive fingers.

The features of the method and device according to the present disclosure are defined in the independent claims, and the preferable features according to the present invention are defined in the dependent claims.

With the method and device for finger aligned accumulation provided by the disclosure, aligned accumulation is performed on data of a user finger by aligning a user timing to system timing, such that data of a user finger of one correlation length can be aligned and accumulated in one system clock cycle, where the correlation length is configurable; and a user timing is aligned to system timing eventually, thereby improving efficiency in finger aligned accumulation of a WCDMA system, preventing a conflict in accessing or reading/writing a RAM for aligned accumulation of two successive fingers, and substantially enhancing capability of interference cancellation of the WCDMA system.

### BRIEF DESCRIPTION OF THE DRAWINGS

Fig.1 is a schematic diagram of offsets of data of four existing user fingers with respect to system timing;
Fig.2 is a flowchart of a method for finger aligned accumulation according to an embodiment of the disclosure;
Fig.3 is a flowchart of a first mode of performing aligned accumulation on reconstructed data of the user finger by aligning a user timing to system timing in a method for finger aligned accumulation according to an embodiment of the disclosure;
Fig.4 is a diagram of a time sequence of aligned accumulation for a user finger in the first mode shown in Fig.3;
Fig.5 is a flowchart of a second mode of performing aligned accumulation on reconstructed data of the user finger by aligning a user timing to system timing in a method for finger aligned accumulation according to an embodiment of the disclosure;
Fig.6 is a diagram of a time sequence of aligned accumulation for data of a user finger with a finger offset of 0.5 ip with respect to system timing in the first mode shown in Fig.5;
Fig.7 is a diagram of a time sequence of aligned accumulation for data of a user finger with a finger offset of 1.5 ip with respect to system timing in the first mode shown in Fig.5;
Fig.8 is a diagram of a general time sequence of aligned accumulation for data of a user finger with a finger offset falling in ip [2n, 2n+1) in a method for finger aligned accumulation according to an embodiment of the disclosure;
Fig.9 is a diagram of a general time sequence of aligned accumulation for data of a user finger with a finger offset falling in ip [2n+1, 2n+2) in a method for finger aligned accumulation according to an embodiment of the disclosure;
Fig.10 is a schematic diagram of a structure of a device for finger aligned accumulation according to an embodiment of the disclosure; and
Fig.11 is a schematic diagram of a structure of an aligned accumulation module in a device for finger aligned accumulation according to an embodiment of the disclosure.

### DETAILED DESCRIPTION

In an embodiment of the disclosure, aligned accumulation is performed on data of a user finger by aligning a user timing to system timing, such that data of a user finger of one correlation length can be aligned and accumulated in one system clock cycle, where the correlation length is configurable; and a user timing is aligned to system timing eventually, thereby improving efficiency in finger aligned accumulation of a WCDMA system and preventing a conflict in accessing or reading/writing a RAM for aligned accumulation of two successive fingers.

As shown in Fig.2, an embodiment of the disclosure provides a method for finger aligned accumulation, including steps as follows.

In step S101, reconstructed data of a user finger are received.

A scenario in running a method according to the embodiment involves aligned accumulation for a signal recovered by reconstruction in interference cancellation of a WCDMA system. A device for running the method for finger aligned accumulation according to the embodiment first receives reconstructed data of a user finger, where data of multiple user fingers have different finger offsets with respect to system timing depending on different delays of paths of reflection or diffraction.

In step S102, aligned accumulation is performed on the reconstructed data of the user finger by aligning a user timing to a system timing.

In the embodiment, aligned accumulation is performed on the reconstructed data of the user finger always by pipelining, where one ip can be aligned each time, i.e., one configurable correlation length is aligned in one clock cycle, with an ultimate goal of aligning a user timing to system timing, while improving efficiency in aligned accumulation for reconstructed data of a user finger and preventing a conflict in aligned accumulation of the system.

The process of implementing step S102 will be elaborated below with two specific modes.

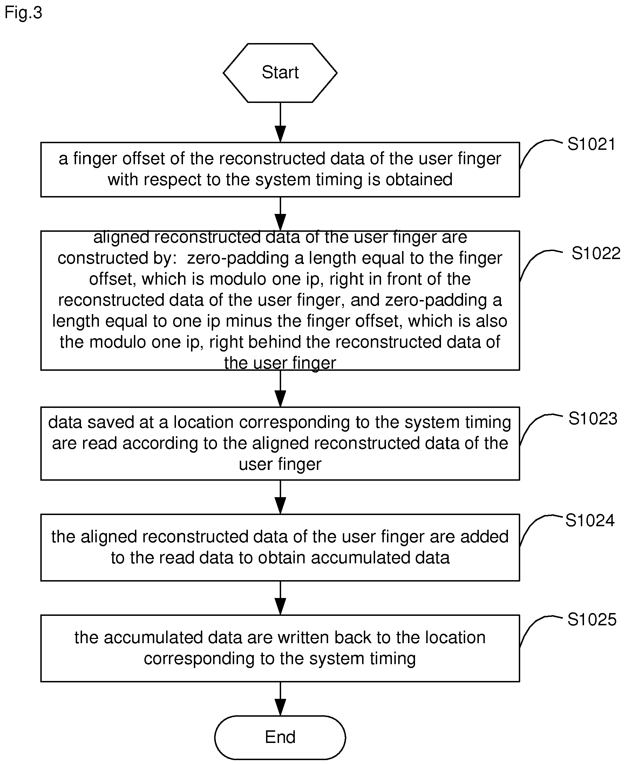

Shown in Fig.3 is a first mode of the embodiment, where step S102 may specifically include steps as follows.

In step S1021, a finger offset of the reconstructed data of the user finger with respect to the system timing is obtained.

In step S1022, aligned reconstructed data of the user finger are constructed by: zero-padding a length equal to the finger offset, which is modulo one ip, right in front of the reconstructed data of the user finger, and zero-padding a length equal to one ip minus the finger offset, which is also the modulo one ip, right behind the reconstructed data of the user finger.

In step S1023, data saved at a location corresponding to the system timing are read according to the aligned reconstructed data of the user finger.

In step S1024, the aligned reconstructed data of the user finger are added to the read data to obtain accumulated data.

In step S1025, the accumulated data are written back to the location corresponding to the system timing.

In the first mode, aligned accumulation may be performed on reconstructed data of one user finger or on data of multiple user fingers. Aligned accumulation is performed on data of multiple user fingers always by pipelining, where one ip can be aligned each time. First, reconstructed data of a user finger is aligned to system timing to obtain aligned data of the user finger; then, data saved at a location corresponding to the system timing is read and accumulation is performed using the aligned reconstructed data of the user finger to obtain an accumulated result; and finally, the accumulated result is saved back to the location corresponding to the system timing.

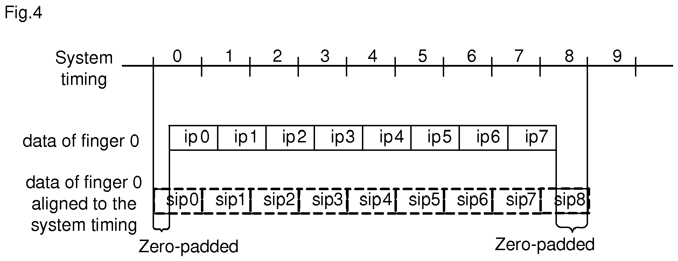

Specifically, Fig.4 shows an example of aligned accumulation for data of a user finger (finger0) as shown in is taken as an example.

Finger0 includes a total of 8 ips (ip0 to ip7) of data, where each correlation length ip is configurable.

First, both a length equal to the finger offset, which is modulo one ip, right in front of the reconstructed data of the user finger, and a length equal to one ip minus the finger offset, which is also the modulo one ip, right behind the reconstructed data of the user finger, are zero-padded to obtain aligned reconstructed data of the user finger from sip0 to sip8.

Then, data saved at the location corresponding to the system timing are read using the aligned reconstructed data of the user finger from sip0 to sip8; accumulation is then performed; and an accumulated result is written back.

In the first mode, a configurable correlation length of reconstructed data of a user finger can be aligned and accumulated within one clock cycle, thereby improving efficiency in finger aligned accumulation of a system in prior art.

A conflict may occur in finger aligned accumulation, where while a pipeline operation of aligned accumulation on reconstructed data of a first user finger is still in process, a data reading operation on a RAM for accumulation is initiated for a subsequent second finger, in which case data reading for the second finger might be initiated at a location before an accumulated result for the first user finger is written back to the location.

In the first mode, a conflict in finger aligned accumulation is prevented by higher-level controlled scheduling, so as to avoid a conflict in aligned accumulation for two successive fingers. In other words, two successive fingers are configured, by a higher-level software, as fingers demodulated by different antennas, and if two successive fingers must be from a same antenna, the higher-level software configures to mask finger reconstruction to ensure that no conflict would occur in accumulation for the two successive fingers.

However, this solution puts a constraint on a software operation, and reconstruction cancellation performance in a practical scenario with a small antenna number will be lost inevitably.

Moreover, the mode requires an additional clock cycle for expanding 8-ip data to 9-ip data (zero-padded at both ends), thereby losing system reconstruction-accumulation capability by a factor of 1/9, or 1/L when an accumulation length of a finger is of L ips.

Accordingly, a second mode is provided for the embodiment. the second mode is similar to the first mode in that aligned accumulation for data of multiple user fingers is also performed by pipelining, where one ip can be aligned each time. The second mode differs from the first mode in that a conflict in finger aligned accumulation can be prevented without higher-level controlled scheduling.

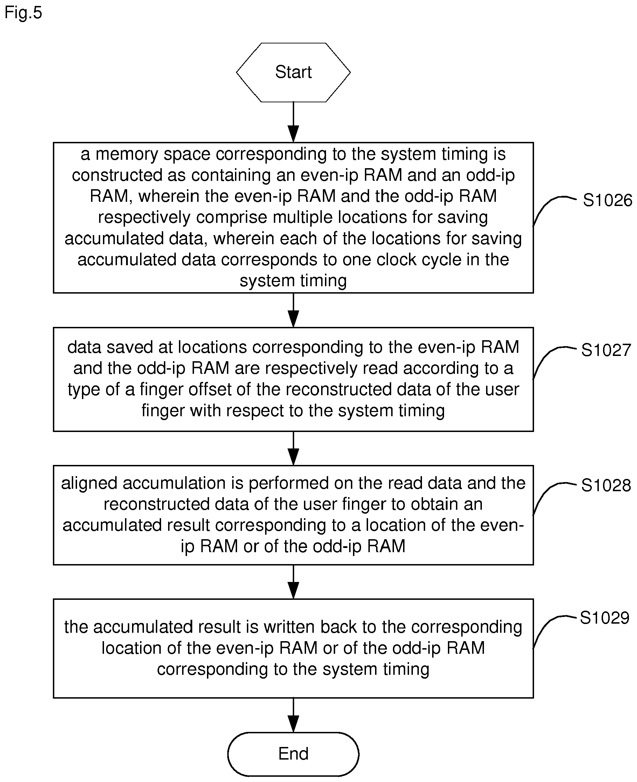

Shown in Fig.5 is a second mode of the embodiment, where step S102 may specifically include steps as follows.

In step S1026, a memory space corresponding to the system timing is constructed as containing an even-ip RAM and an odd-ip RAM, wherein the even-ip RAM and the odd-ip RAM respectively include multiple locations for saving accumulated data, wherein each of the locations for saving accumulated data corresponds to one clock cycle in the system timing.

In step S1027, data saved at locations corresponding to the even-ip RAM and the odd-ip RAM are respectively read according to a type of a finger offset of the reconstructed data of the user finger with respect to the system timing.

The type of the finger offset of the reconstructed data of the user finger with respect to the system timing may include: a finger offset falling in ip [2n, 2n+1) with respect to the system timing, or a finger offset falling in ip [2n+1, 2n+2) with respect to the system timing, where the n is an integer.

For data of multiple user fingers, when aligned accumulation is performed in series for two successive fingers, there may be four combinations in which a conflict in reading/writing a RAM for accumulation may occur, depending on finger offsets of the two successive fingers with respect to system timing.

In step S1028, aligned accumulation is performed on the read data and the reconstructed data of the user finger to obtain an accumulated result corresponding to a location of the even-ip RAM or of the odd-ip RAM.

In step S1029, the accumulated result is written back to the corresponding location of the even-ip RAM or of the odd-ip RAM corresponding to the system timing.

In the second mode, a RAM for accumulation aligned to system timing is divided into an even-ip RAM and an odd-ip RAM, wherein the even-ip RAM and the odd-ip RAM respectively include multiple locations for saving accumulated data, and each of the locations for saving accumulated data corresponds to one clock cycle in the system timing.

In initial alignment, the RAM for accumulation is empty, and so are the even-ip RAM and the odd-ip RAM.

In aligned accumulation, First, one even ip and one odd ip are read from the RAM for accumulation each time for aligning an ip in a user timing; then, one even ip or one odd ip are subsequently read from the even-ip RAM or the odd-ip RAM according to the type of the finger offset with respect to system timing; and an ip in the user timing is aligned and a previous accumulated result is combined, such that the finger alignment efficiency is improved.

The second mode will be elaborated below with reference to specific examples.

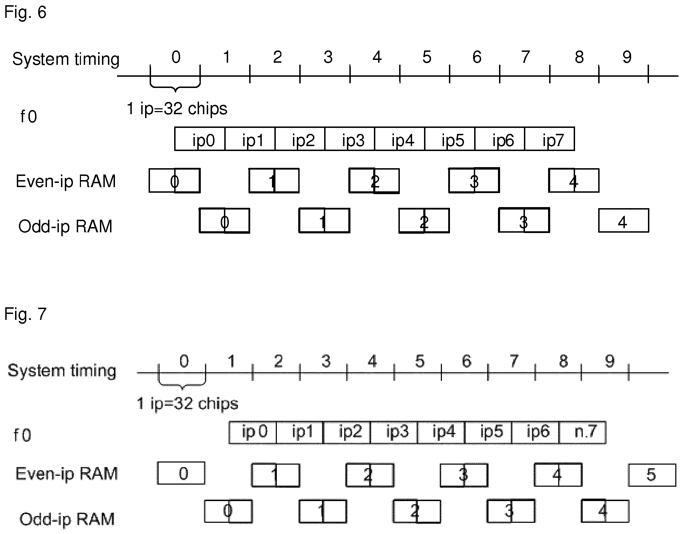

Fig.6 is a diagram of a time sequence of aligned accumulation for data of a user finger with a finger offset of 0.5 ip with respect to system timing.

In Fig.6, f0 is an abbreviation of reconstructed data of user finger0, and has a finger offset of 0.5 ip with respect to system timing.

In the example, a RAM for accumulation in system timing is divided into an even-ip RAM and an odd-ip RAM, then aligned accumulation is performed according to steps as follows.

Data saved in even-ip and odd-ip parts in system timing that correspond to ip0 of f0 are read out at the same time, where the corresponding even-ip and odd-ip parts are even-ip RAM address 0 and odd-ip RAM address 0 in Fig.6, respectively; aligned accumulation is performed for data of ip0 of f0, and then the accumulated result for even-ip RAM address 0 is saved back, while the accumulated result of odd-ip RAM address 0 is not saved back until aligned accumulation is performed for ip1 of f0.

Data saved in an even-ip part in system timing corresponding to ip1 of f0 are read out; aligned accumulation is performed, for data of ip1 of f0, on even-ip RAM address 1 and odd-ip RAM address 0 in Fig.6 in combination with the accumulated result of odd-ip RAM address 0; then the accumulated result of odd-ip RAM address 0 is saved back, while the accumulated result of even-ip RAM address 1 is not saved back until aligned accumulation is performed for ip2 of f0.

Aligned accumulation for ip2 to ip6 of f0 is performed in a way similar to that for ip0 and ip1 of f0; and after aligned accumulation for ip6 is completed, the accumulated result of odd-ip RAM address 3 is not saved back until aligned accumulation is performed for ip7 of f0.

Data saved in an even-ip part in system timing corresponding to ip7 of f0 are read out; aligned accumulation is performed, for data of ip7 of f0, on even-ip RAM address 4 and odd-ip RAM address 3 in Fig.6 in combination with the accumulated result of odd-ip RAM address 3; then accumulated results of both odd-ip RAM address 3 and even-ip RAM address 4 are saved back at the same time.

Aligned accumulation for an f0 finger offset of 1.5 ip differs from that of 0.5 ip shown in Fig.6 in that: first, data saved in even-ip RAM address 1 and odd-ip RAM address 0 have to be read out at the same time; and finally accumulated results for both even-ip RAM address 4 and odd-ip RAM address 4 have to be written back at the same time, as shown in Fig.7, which is a diagram of a time sequence of aligned accumulation for data of a user finger with a finger offset of 1.5 ip with respect to system timing.

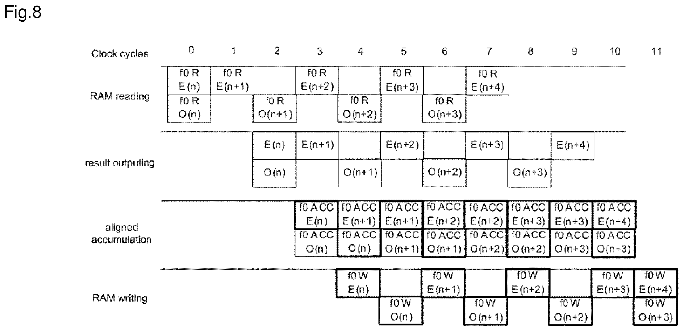

In accordance with the principle for aligned accumulation as shown in Fig.6, a general time sequence of aligned accumulation for data of a user finger with a finger offset falling in ip [2n, 2n+1), n being an integer, is available, as shown in Fig.8.

Assume that RAM data are read out two clock cycles after a reading operation of a RAM for accumulation in system timing is enabled; depositing an accumulated result in a register takes 1 cycle; and data to be written back to RAM and a RAM address finally generated are delayed by another cycle, where such delays are all variable. In addition, f0 R E(n) indicates that reading is performed for f0 on even-ip RAM address (n); f0 ACC E(n) indicates that an accumulated result is obtained by adding data of ip0 of f0 to data saved in even ip address (n) in system timing; a thin-line frame marks an accumulated result that is obtained after aligned accumulation is performed once, and that is waiting to be written back after aligned accumulation is performed once again; a thick-line frame marks an accumulated result ready to be written back after aligned accumulation is performed once or twice; and f0 W E(n) indicates a writing-back operation on even ip address (n) in system timing.

Specifically, as shown in Fig.8, for an f0 finger offset falling in ip [2n, 2n+1)(n being an arbitrary integer) with respect to system timing, aligned accumulation for ip0 of f0 is described as follows.

In clock cycle 0, data saved in even-ip RAM address n and odd-ip RAM address n have to be read out respectively; in clock cycle 2, read-out data denoted respectively by E(n) and O(n) are obtained; in clock cycle 3, ip0 of f0 are separated into a front portion and a rear portion by being aligned to system timing, accumulation is performed to add the front and rear portions to E(n) and O(n) respectively, and then accumulated results are deposited to obtain thick-wire-framed f0 ACC E(n)and thin-wire-framed f0 ACC O(n); thick-wire-framed f0 ACC E(0) indicates that aligned accumulation for f0 is completed, while thin-wire-framed f0 ACC O(n) indicates that aligned accumulation for the front portion of ip1 of f0 is to be performed in subsequent clock cycle 4; consequently, in clock cycle 4, result of f0 ACC E(n) can be written back to even-ip RAM address n; and in clock cycle 5, f0 ACC O(n) is then written back to odd-ip RAM address n.

For ip1 of f0, in clock cycle 0, data saved in even-ip RAM address n+1 are read out; in clock cycle 3, E(n+1) is obtained; in clock cycle 4, accumulation is performed to add the front and rear portions of ip1 of f0 to data in thin-wire-framed f0 ACC O(n) and E(n+1) respectively, and then accumulated results are deposited to obtain thick-wire-framed f0 ACC O(n) and thin-wire-framed f0 ACC E(n+1); and in clock cycle 5, result of f0 ACC O(n) is written back to odd-ip RAM address n. f0 ACC E(n+1) indicates that aligned accumulation for ip2 will be performed in clock cycle 5 and result will be written back to even-ip RAM address n+1 in clock cycle 6.

Operation for ip2 to ip7 of f0 differs from that of ip1 just in that, for ip7, thick-wire-framed f0 ACC E(n+4) and thick-wire-framed f0 ACC O(n+3) are directly obtained after aligned accumulation and deposition in clock cycle 10, and are simultaneously written back to even-ip RAM address n+4 and odd-ip RAM address n+3 respectively in clock cycle 11.

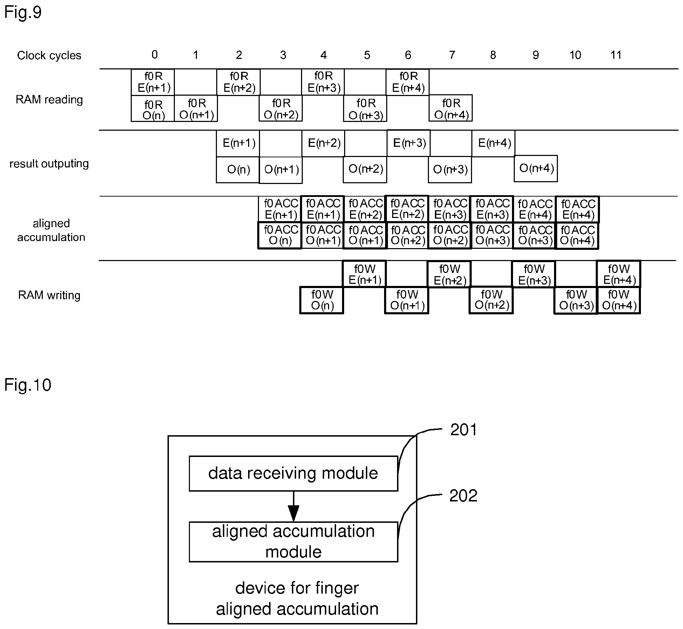

In accordance with the principle for aligned accumulation as shown in Fig.7, a general time sequence of aligned accumulation for data of a user finger with a finger offset falling in ip [2n+1, 2n+2)(n being an arbitrary integer), is available. As shown in Fig.9, for an f0 finger offset falling in ip [2n+1, 2n+2)(n being an arbitrary integer) with respect to system timing, aligned accumulation for ip0 to ip7 of f0 differs from the case for an f0 finger offset falling in ip [2n, 2n+1) only in that an even-ip RAM or odd-ip RAM address where reading operation is performed in a same clock cycle differs, and so is a time sequence in writing-back operations on even-ip or odd-ip RAM after accumulation.

It can be concluded from the second mode that in an optimized single finger aligned accumulation solution, 8 cycles are used for aligned accumulation for data of 8 ips without losing system reconstruction cancellation capability, thereby improving efficiency in aligned accumulation for reconstructed data of a user finger of a system.

A time sequence of aligned accumulation for two successive fingers and of a solution to a conflict issue thereof will be elaborated below.

As shown in Fig.8, ip0 of a finger f1 next to f0 arrives after clock cycle 8, for which reading operation has to be performed on a certain even-ip or odd-ip RAM address, while at this moment (clock cycle 8)results of f0 ACC E(n+2), f0 ACC 0(n+2), f0 ACC E(n+3), f0 ACC O(n+3) and f0 ACC E(n+4) have not been written back to an even-ip RAM or an odd-ip RAM. If an offset of the subsequent second finger f1 with respect to the system timing differs a lot from an offset of first finger f0 with respect to the system timing, then everything is all right when the pipeline operation of aligned accumulation is performed according to Fig.8 or Fig.9; however, when an offset of the subsequent second finger f1 with respect to the system timing is within a specific range from that of f0, then data in the five addresses may have to be read for ip0. For example, for f1 finger offset of (2n+4) ips, reading has to be performed on E(n+2) and O(n+2) in clock cycle 8 for ip0, in which case when aligned accumulation is performed in series for two successive fingers, a conflict in an operation on a RAM for accumulation (including a case when two reading/writing operations are performed simultaneously on a same address, or a case where reading is about to be performed for a subsequent second finger on an address before an accumulated result for a first finger is written back to the address) may occur, in which case, accumulation and writing-back operation for the first finger is normally performed according to an established rule, while in accumulation for the subsequent second finger, instead of reading data from an even-ip RAM or an odd-ip RAM, data are obtained from a stage of an accumulating pipeline or of a writing-back pipeline of the first finger to serve as a basis on which further aligned accumulation for ip0 is to be performed.

For example, if the finger offset of f1 is equal to (2n+4) ips, reading has to be performed for ip0 of f1 on even-ip RAM address (n+2) and odd-ip RAM address (n+2) in clock cycle 8, and E(n+2) and O(n+2) are expected to be obtained in clock cycle 10; however the accumulated result for f0 is about to be written back to E(n+2) in clock cycle 8, while writing-back to O(n+2) will not happen until clock cycle 9. To prevent such a conflict, a result to be written back to E(n+2)(f0 W E(n+2)) in clock cycle 8 may be delayed by 2 clock cycles, and may be regarded as, in clock cycle 10, the result read from even-ip RAM address (n+2); and a result to be written back to O(n+2)(f0 W O(n+2)) in clock cycle 9 may be delayed by 1 clock cycle, and may be regarded as, in clock cycle 10, the result read from odd-ip RAM address (n+2). Since a remaining step of a pipeline operation of f0 exists only in clock cycles 8 to 11 (depending on a number of stages of a practical pipeline), a conflict may occur only in reading/writing a RAM for accumulation for ip0 to ip3 of f1 and for f0. The conflict may be handled as aforementioned, i.e., when a conflict occurs, relevant data are retrieved from a stage of an aligned accumulating pipeline of the previous finger (with possible proper delays), and are regarded as the result read from an even-ip RAM or odd-ip RAM serving as basis for a subsequent operation such as alignment, accumulation and writing-back.

In Fig.9, when the offset of f1 with respect to system timing is within a specific range from that of f0, in case a conflict occurs in pipeline operation for f0 and operation on a RAM for accumulation when reading on even-ip RAM or odd-ip RAM for ip0 to ip3 of f1, then as aforementioned, relevant data are retrieved from a stage of an aligned accumulating pipeline of f0 (with possible proper delays), and are regarded as the result read from RAM serving as basis for a subsequent operation such as alignment, accumulation and writing-back.

The type of the finger offset of the reconstructed data of the user finger with respect to the system timing may include: a finger offset falling in ip [2n, 2n+1) with respect to the system timing, or a finger offset falling in ip [2n+1, 2n+2) with respect to the system timing, where the n is an arbitrary integer.

When aligned accumulation is performed in series for two successive fingers, there may be four combinations in which a conflict in reading/writing a RAM for accumulation may occur, depending on finger offsets of the two successive fingers with respect to system timing.

The four combinations include:
(1) (f0 offset ∈ ip [2n, 2n+1))&& (f1 offset ∈ [2X, 2X+1)ip);
(2) (f0 offset ∈ ip [2n, 2n+1))&& (f1 offset ∈ [2X+1, 2X+2)ip);
(3) (f0 offset ∈ ip [2n+1, 2n+2))&& (f1 offset ∈ [2X, 2X+1)ip); and
(4) (f0 offset ∈ ip [2n+1, 2n+2))&& (f1 offset ∈ [2X+1, 2X+2)ip).

Wherein both n and X are integer.

Assume that "a" cycles before arrival of a subsequent second finger f1, accumulated results of b ips are still not written back to an even-ip RAM or an odd-ip RAM. If offsets of f0 and f1 differ a lot, then such accumulated results yet to be written back will not be used/read in aligned accumulation for f1; and thus like for f0, aligned accumulation for f1 will be performed according to aligned accumulation as described above; if offsets of f0 and f1 meet a certain relation, such an accumulated result for f0 yet to be written back may be used/read in aligned accumulation for f1, thereby leading to a conflict in reading/writing, in which case in aligned accumulation for the subsequent second finger f1, it is required to detect and handle such a conflict respectively.

After reconstructed data of the current user finger to be accumulated are input, relation between offsets of the current user finger and a previous user finger is determined first, then a conflict in accumulation is solved according to a conflict condition, which is determined specifically by first determining which one of the 4 combinations defines the offsets of two successive fingers, then analyzing a specific conflict.

According to different conflict conditions, data are obtained from different pipeline stages for aligned accumulation; for example an accumulated result corresponding to the conflicting RAM location are obtained from a location of the even-ip RAM or of the odd-ip RAM, or from a stage of an accumulating pipeline, or from a stage of a writing-back pipeline; and aligned accumulation is performed on the accumulated result corresponding to the conflicting RAM location and reconstructed data of the current user finger, thereby effectively handling a conflict in reading/writing a RAM for accumulation when aligned accumulation is performed in series for two successive fingers.

In addition, for serial aligned accumulation for reconstructed data of more (N, for example)user fingers, operation for each current finger just involves a conflicting relation between the current finger and the previous finger and between the current finger and the subsequent finger. A conflict in accumulation is handled as aforementioned, thereby improving processing capability of an interference cancellation system.

With the embodiment, aligned accumulation is performed on data of a user finger by aligning a user timing to system timing, such that data of a user finger of one correlation length can be aligned and accumulated in one system clock cycle, where the correlation length is configurable; and a user timing is aligned to system timing eventually, thereby improving efficiency in finger aligned accumulation of a WCDMA system, preventing a conflict in accessing or reading/writing a RAM for aligned accumulation of two successive fingers, and substantially enhancing capability of interference cancellation of the WCDMA system.

As shown in Fig.10, an embodiment of the present disclosure provides a device for finger aligned accumulation, which is generally arranged in a WCDMA baseband receiver side. The device includes: a data receiving module 201 and an aligned accumulation module 202, wherein
the data receiving module 201 is configured for receiving reconstructed data of a user finger; and
the aligned accumulation module 202 is configured for performing aligned accumulation on the reconstructed data of the user finger by aligning a user timing to a system timing.

The device for finger aligned accumulation of the embodiment first receives the reconstructed data of a user finger by the data receiving module 201, where data of multiple user fingers have different finger offsets with respect to system timing depending on different delays of paths of reflection or diffraction. Then, the aligned accumulation is performed on the reconstructed data of the user finger by the aligned accumulation module 202 by aligning a user timing to system timing.

In the embodiment, aligned accumulation is performed on the reconstructed data of the user finger always by pipelining, where one ip can be aligned each time, i.e., one configurable correlation length is aligned in one clock cycle, with an ultimate goal of aligning a user timing to system timing, while improving efficiency in aligned accumulation for reconstructed data of a user finger and preventing a conflict in aligned accumulation of the system.

The process of performing the aligned accumulation on the reconstructed data of the user finger by the aligned accumulation module 202 by aligning a user timing to system timing in the embodiment will be elaborated below by two specific modes.

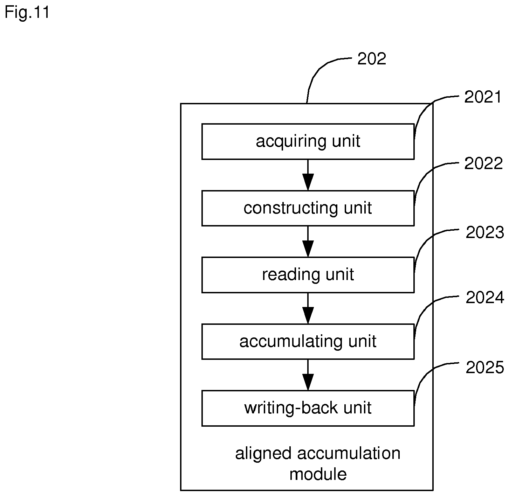

Shown in Fig.11 is a first mode of the embodiment, where the aligned accumulation module 202 includes an acquiring unit 2021, a constructing unit 2022, a reading unit 2023, an accumulating unit 2024 and a writing-back unit 2025,.

The acquiring unit 2021 is configured for acquiring a finger offset of the reconstructed data of the user finger with respect to the system timing.

The constructing unit 2022 is configured for constructing aligned reconstructed data of the user finger by: zero-padding a length equal to the finger offset, which is modulo one ip, right in front of the reconstructed data of the user finger, and zero-padding a length equal to one ip minus the finger offset, which is also the modulo one ip, right behind the reconstructed data of the user finger.

The reading unit 2023 is configured for reading data saved at a location corresponding to the system timing according to the aligned reconstructed data of the user finger.

The accumulating unit 2024 is configured for adding the aligned reconstructed data of the user finger to the read data to obtain accumulated data.

The writing-back unit 2025 is configured for writing the accumulated data back to the location corresponding to the system timing.

The aligned accumulation module 202 may be further configured for preventing a conflict in finger aligned accumulation by higher-level controlled scheduling.

In the first mode, aligned accumulation may be performed on reconstructed data of one user finger or on data of multiple user fingers. Aligned accumulation is performed on data of multiple user fingers always by pipelining, where one ip can be aligned each time. First, reconstructed data of a user finger is aligned to system timing to obtain aligned data of the user finger; then, data saved at a location corresponding to the system timing is read and accumulation is performed using the aligned reconstructed data of the user finger to obtain an accumulated result; and finally, the accumulated result is saved back to the location corresponding to the system timing.

Specifically, Fig.4 shows an example of aligned accumulation for data of a user finger (finger0) as shown in is taken as an example.

Finger0 includes a total of 8 ips (ip0 to ip7) of data, where each correlation length ip is configurable.

First, both a length equal to the finger offset, which is modulo one ip, right in front of the reconstructed data of the user finger, and a length equal to one ip minus the finger offset, which is also the modulo one ip, right behind the reconstructed data of the user finger, are zero-padded to obtain aligned reconstructed data of the user finger from sip0 to sip8.

Then, data saved at the location corresponding to the system timing are read using the aligned reconstructed data of the user finger from sip0 to sip8; accumulation is then performed; and an accumulated result is written back..

In the first mode, a configurable correlation length of reconstructed data of a user finger can be aligned and accumulated within one clock cycle, thereby improving efficiency in finger aligned accumulation of a system in prior art.

A conflict may occur in finger aligned accumulation, where while a pipeline operation of aligned accumulation on reconstructed data of a first user finger is still in process, a data reading operation on a RAM for accumulation is initiated for a subsequent second finger, in which case data reading for the second finger might be initiated at a location before an accumulated result for the first user finger is written back to the location.

In the first mode, a conflict in finger aligned accumulation is prevented by higher-level controlled scheduling, so as to avoid a conflict in aligned accumulation for two successive fingers. In other words, two successive fingers are configured, by a higher-level software, as fingers demodulated by different antennas, and if two successive fingers must be from a same antenna, the higher-level software configures to mask finger reconstruction to ensure that no conflict would occur in accumulation for the two successive fingers.

However, this solution puts a constraint on a software operation, and reconstruction cancellation performance in a practical scenario with a small antenna number will be lost inevitably.

Moreover, the mode requires an additional clock cycle for expanding 8-ip data to 9-ip data (zero-padded at both ends), thereby losing system reconstruction-accumulation capability by a factor of 1/9, or 1/L when an accumulation length of a finger is of L ips.

Accordingly, a second mode is provided for the embodiment. the second mode is similar to the first mode in that aligned accumulation for data of multiple user fingers is also performed by pipelining, where one ip can be aligned each time. The second mode differs from the first mode in that a conflict in finger aligned accumulation can be prevented without higher-level controlled scheduling.

Specifically, in the second mode:
the constructing unit 2022 is further configured for constructing a memory space corresponding to the system timing and containing an even-ip RAM and an odd-ip RAM, wherein the even-ip RAM and the odd-ip RAM respectively include multiple locations for saving accumulated data, wherein each of the locations for saving accumulated data corresponds to one clock cycle in the system timing;
the reading unit 2023 is further configured for respectively reading data saved at locations corresponding to the even-ip RAM and the odd-ip RAM according to a type of a finger offset of the reconstructed data of the user finger with respect to the system timing;
the accumulating unit 2024 accumulating unit is further configured for performing aligned accumulation on the read data and the reconstructed data of the user finger to obtain an accumulated result corresponding to a location of the even-ip RAM or of the odd-ip RAM; and
the writing-back unit 2025 is further configured for writing the accumulated result back to the corresponding location of the even-ip RAM or of the odd-ip RAM corresponding to the system timing.

Moreover, the aligned accumulation module 202 is further configured for: when a conflict occurs in accessing a RAM location during aligned accumulation for reconstructed data of two successive user fingers, acquiring an accumulated result corresponding to the conflicting RAM location from a location of the even-ip RAM or of the odd-ip RAM, or from a stage of an accumulating pipeline, or from a stage of a writing-back pipeline; and performing aligned accumulation on the accumulated result corresponding to the conflicting RAM location and reconstructed data of a current user finger.

The type of the finger offset of the reconstructed data of the user finger with respect to the system timing may include: a finger offset falling in ip [2n, 2n+1) with respect to the system timing, or a finger offset falling in ip [2n+1, 2n+2) with respect to the system timing, where the n is an integer.

For data of multiple user fingers, when aligned accumulation is performed in series for two successive fingers, there may be four combinations in which a conflict in reading/writing a RAM for accumulation may occur, depending on finger offsets of the two successive fingers with respect to system timing.

Specifically, in the second mode, a RAM for accumulation aligned to system timing is divided into an even-ip RAM and an odd-ip RAM, wherein the even-ip RAM and the odd-ip RAM respectively include multiple locations for saving accumulated data, and each of the locations for saving accumulated data corresponds to one clock cycle in the system timing.

In initial alignment, the RAM for accumulation is empty, and so are the even-ip RAM and the odd-ip RAM.

In aligned accumulation, First, one even ip and one odd ip are read from the RAM for accumulation each time for aligning an ip in a user timing; then, one even ip or one odd ip are subsequently read from the even-ip RAM or the odd-ip RAM according to the type of the finger offset with respect to system timing; and an ip in the user timing is aligned and a previous accumulated result is combined, such that the finger alignment efficiency is improved.

The second mode will be elaborated below with reference to specific examples.

As shown in Fig.6, f0 is an abbreviation of reconstructed data of user finger0, and has a finger offset of 0.5 ip with respect to system timing.

In the example, a RAM for accumulation in system timing is divided into an even-ip RAM and an odd-ip RAM, then aligned accumulation is performed according to steps as follows.

Data saved in even-ip and odd-ip parts in system timing that correspond to ip0 of f0 are read out at the same time, where the corresponding even-ip and odd-ip parts are even-ip RAM address 0 and odd-ip RAM address 0 in Fig.6, respectively; aligned accumulation is performed for data of ip0 of f0, and then the accumulated result for even-ip RAM address 0 is saved back, while the accumulated result of odd-ip RAM address 0 is not saved back until aligned accumulation is performed for ip1 of f0.

Data saved in an even-ip part in system timing corresponding to ip1 of f0 are read out; aligned accumulation is performed, for data of ip1 of f0, on even-ip RAM address 1 and odd-ip RAM address 0 in Fig.6 in combination with the accumulated result of odd-ip RAM address 0; then the accumulated result of odd-ip RAM address 0 is saved back, while the accumulated result of even-ip RAM address 1 is not saved back until aligned accumulation is performed for ip2 of f0.

Aligned accumulation for ip2 to ip6 of f0 is performed in a way similar to that for ip0 and ip1 of f0; and after aligned accumulation for ip6 is completed, the accumulated result of odd-ip RAM address 3 is not saved back until aligned accumulation is performed for ip7 of f0.

Data saved in an even-ip part in system timing corresponding to ip7 of f0 are read out; aligned accumulation is performed, for data of ip7 of f0, on even-ip RAM address 4 and odd-ip RAM address 3 in Fig.6 in combination with the accumulated result of odd-ip RAM address 3; then accumulated results of both odd-ip RAM address 3 and even-ip RAM address 4 are saved back at the same time..

Aligned accumulation for an f0 finger offset of 1.5 ip differs from that of 0.5 ip shown in Fig.6 in that: first, data saved in even-ip RAM address 1 and odd-ip RAM address 0 have to be read out at the same time; and finally accumulated results for both even-ip RAM address 4 and odd-ip RAM address 4 have to be written back at the same time, as shown in Fig.7, which is a diagram of a time sequence of aligned accumulation for data of a user finger with a finger offset of 1.5 ip with respect to system timing.

In accordance with the principle for aligned accumulation as shown in Fig.6, a general time sequence of aligned accumulation for data of a user finger with a finger offset falling in ip [2n, 2n+1), n being an integer, is available, as shown in Fig.8.

Assume that RAM data are read out two clock cycles after a reading operation of a RAM for accumulation in system timing is enabled; depositing an accumulated result in a register takes 1 cycle; and data to be written back to RAM and a RAM address finally generated are delayed by another cycle, where such delays are all variable. In addition, f0 R E(n) indicates that reading is performed for f0 on even-ip RAM address (n); f0 ACC E(n) indicates that an accumulated result is obtained by adding data of ip0 of f0 to data saved in even ip address (n) in system timing; a thin-line frame marks an accumulated result that is obtained after aligned accumulation is performed once, and that is waiting to be written back after aligned accumulation is performed once again; a thick-line frame marks an accumulated result ready to be written back after aligned accumulation is performed once or twice; and f0 W E(n) indicates a writing-back operation on even ip address (n) in system timing.

In accordance with the principle for aligned accumulation as shown in Fig.7, a general time sequence of aligned accumulation for data of a user finger with a finger offset falling in ip [2n+1, 2n+2)(n being an arbitrary integer), is available, as shown in Fig.9.

It can be concluded from the second mode that in an optimized single finger aligned accumulation solution, 8 cycles are used for aligned accumulation for data of 8 ips without losing system reconstruction cancellation capability, thereby improving efficiency in aligned accumulation for reconstructed data of a user finger of a system.

As described above, the type of the finger offset of the reconstructed data of the user finger with respect to the system timing may include: a finger offset falling in ip [2n, 2n+1) with respect to the system timing, or a finger offset falling in ip [2n+1, 2n+2) with respect to the system timing, where the n is an arbitrary integer.

When aligned accumulation is performed in series for two successive fingers, there may be four combinations in which a conflict in reading/writing a RAM for accumulation may occur, depending on finger offsets of the two successive fingers with respect to system timing.

The four combinations include:
(1) (f0 offset ∈ ip [2n, 2n+1))&& (f1 offset ∈ [2X, 2X+1)ip);
(2) (f0 offset ∈ ip [2n, 2n+1))&& (f1 offset ∈ [2X+1, 2X+2)ip);
(3) (f0 offset ∈ ip [2n+1, 2n+2))&& (f1 offset ∈ [2X, 2X+1)ip); and
(4) (f0 offset ∈ ip [2n+1, 2n+2))&& (f1 offset ∈ [2X+1, 2X+2)ip).

Wherein both n and X are integer.

Assume that "a" cycles before arrival of a subsequent second finger f1, accumulated results of b ips are still not written back to an even-ip RAM or an odd-ip RAM. If offsets of f0 and f1 differ a lot, then such accumulated results yet to be written back will not be used/read in aligned accumulation for f1; and thus like for f0, aligned accumulation for f1 will be performed according to aligned accumulation as described above; if offsets of f0 and f1 meet a certain relation, such an accumulated result for f0 yet to be written back may be used/read in aligned accumulation for f1, thereby leading to a conflict in reading/writing, in which case in aligned accumulation for the subsequent second finger f1, it is required to detect and handle such a conflict respectively.

After reconstructed data of the current user finger to be accumulated are input, relation between offsets of the current user finger and a previous user finger is determined first, then a conflict in accumulation is solved according to a conflict condition, which is determined specifically by first determining which one of the 4 combinations defines the offsets of two successive fingers, then analyzing a specific conflict.

According to different conflict conditions, data are obtained from different pipeline stages for aligned accumulation; for example an accumulated result corresponding to the conflicting RAM location are obtained from a location of the even-ip RAM or of the odd-ip RAM, or from a stage of an accumulating pipeline, or from a stage of a writing-back pipeline; and aligned accumulation is performed on the accumulated result corresponding to the conflicting RAM location and reconstructed data of the current user finger, thereby effectively handling a conflict in reading/writing a RAM for accumulation when aligned accumulation is performed in series for two successive fingers.

In addition, for serial aligned accumulation for reconstructed data of more (N, for example)user fingers, operation for each current finger just involves a conflicting relation between the current finger and the previous finger and between the current finger and the subsequent finger. A conflict in accumulation is handled as aforementioned, thereby improving processing capability of an interference cancellation system.

With the embodiment, aligned accumulation is performed on data of a user finger by aligning a user timing to system timing, such that data of a user finger of one correlation length can be aligned and accumulated in one system clock cycle, where the correlation length is configurable; and a user timing is aligned to system timing eventually, thereby improving efficiency in finger aligned accumulation of a WCDMA system, preventing a conflict in accessing or reading/writing a RAM for aligned accumulation of two successive fingers, and substantially enhancing capability of interference cancellation of the WCDMA system.

## Claims

1. A method for finger aligned accumulation in interference cancellation, comprising receiving reconstructed data of a user finger (S101), wherein the reconstructed data of the user finger are obtained using finger offset information obtained through RAKE reception and user symbols correctly demodulated and decoded in combination with a channel estimation, and have recovered amplitude and phase information of the user finger arriving at a receiver side after propagating in a wireless channel; and
performing aligned accumulation on the reconstructed data of the user finger by aligning a user timing to a system timing (S102) of original antenna data, such that accumulated data are subtracted from the original antenna data to cancel impact of known user fingers on an unknown user finger yet to be demodulated and decoded correctly,
where data of multiple user fingers have different finger offsets with respect to the system timing depending on different delays of paths of reflection or diffraction,
wherein the aligned accumulation is performed on the reconstructed data of the user finger by pipelining,
wherein one configurable correlation length ip is aligned in one clock cycle, **characterised in that** the step of performing aligned accumulation on the reconstructed data of the user finger by aligning a user timing to a system timing comprises:
acquiring a finger offset of the reconstructed data of the user finger with respect to the system timing (S1021);
constructing aligned reconstructed data of the user finger by: zero-padding a length equal to the finger offset, which is modulo one ip, right in front of the reconstructed data of the user finger, and zero-padding a length equal to one ip minus the finger offset, which is also the modulo one ip, right behind the reconstructed data of the user finger (S1022);
reading data saved at a location corresponding to the system timing according to the aligned reconstructed data of the user finger (S1023);
adding the aligned reconstructed data of the user finger to the read data to obtain accumulated data (S1024); and
writing the accumulated data back to the location corresponding to the system timing (S1025).

2. The method according to claim 1, further comprising:
preventing a conflict in finger aligned accumulation by higher-level controlled scheduling.

3. The method according to claim 1, wherein the step of performing aligned accumulation on the reconstructed data of the user finger by aligning a user timing to a system timing comprises:
constructing a memory space corresponding to the system timing and containing an even-ip RAM and an odd-ip RAM, wherein the even-ip RAM and the odd-ip RAM respectively comprise multiple locations for saving accumulated data, wherein each of the locations for saving accumulated data corresponds to one clock cycle in the system timing (S1026);
respectively reading data saved at locations corresponding to the even-ip RAM and the odd-ip RAM according to a type of a finger offset of the reconstructed data of the user finger with respect to the system timing (S1027);
performing aligned accumulation on the read data and the reconstructed data of the user finger to obtain an accumulated result corresponding to a location of the even-ip RAM or of the odd-ip RAM (S1028); and
writing the accumulated result back to the corresponding location of the even-ip RAM or of the odd-ip RAM corresponding to the system timing (S1029).

4. The method according to claim 3, wherein the step of performing aligned accumulation on the reconstructed data of the user finger by aligning a user timing to a system timing further comprises:
when a conflict occurs in accessing a RAM location during aligned accumulation for reconstructed data of two successive user fingers, acquiring an accumulated result corresponding to the conflicting RAM location from a location of the even-ip RAM or of the odd-ip RAM, or from a stage of an accumulating pipeline, or from a stage of a writing-back pipeline; and performing aligned accumulation on the accumulated result corresponding to the conflicting RAM location and reconstructed data of a current user finger.

5. The method according to claim 3 or 4, wherein the type of the finger offset of the reconstructed data of the user finger with respect to the system timing comprises: a finger offset falling in ip [2n, 2n+1) with respect to the system timing, or a finger offset falling in ip [2n+1, 2n+2) with respect to the system timing, wherein the n is an integer.

6. A device for finger aligned accumulation in interference cancellation, comprising a data receiving module (201) and an aligned accumulation module (202), wherein
the data receiving module (201) is configured for receiving reconstructed data of a user finger, wherein the reconstructed data of the user finger are obtained using finger offset information obtained through RAKE reception and user symbols correctly demodulated and decoded in combination with a channel estimation, and have recovered amplitude and phase information of the user finger arriving at a receiver side after propagating in a wireless channel; and
the aligned accumulation module (202) is configured for performing aligned accumulation on the reconstructed data of the user finger by aligning a user timing to a system timing of original antenna data, such that accumulated data are subtracted from the original antenna data to cancel impact of known user fingers on an unknown user finger yet to be demodulated and decoded correctly,
where data of multiple user fingers have different finger offsets with respect to the system timing depending on different delays of paths of reflection or diffraction,
wherein the aligned accumulation module (202) is further configured for performing the aligned accumulation on the reconstructed data of the user finger by pipelining,
wherein one configurable correlation length ip is aligned in one clock cycle, **characterised in that** the aligned accumulation module (202) comprises an acquiring unit (2021), a constructing unit (2022), a reading unit (2023), an accumulating unit (2024) and a writing-back unit (2025), wherein
the acquiring unit (2021) is configured for acquiring a finger offset of the reconstructed data of the user finger with respect to the system timing;
the constructing unit (2022) is configured for constructing aligned reconstructed data of the user finger by: zero-padding a length equal to the finger offset, which is modulo one ip, right in front of the reconstructed data of the user finger, and zero-padding a length equal to one ip minus the finger offset, which is also the modulo one ip, right behind the reconstructed data of the user finger;
the reading unit (2023) is configured for reading data saved at a location corresponding to the system timing according to the aligned reconstructed data of the user finger;
the accumulating unit (2024) is configured for adding the aligned reconstructed data of the user finger to the read data to obtain accumulated data; and
the writing-back unit (2025) is configured for writing the accumulated data back to the location corresponding to the system timing.

7. The device according to claim 6, wherein the aligned accumulation module (202) is further configured for preventing a conflict in finger aligned accumulation by higher-level controlled scheduling.

8. The device according to claim 6, wherein
the constructing unit (2022) is further configured for constructing a memory space corresponding to the system timing and containing an even-ip RAM and an odd-ip RAM, wherein the even-ip RAM and the odd-ip RAM respectively comprise multiple locations for saving accumulated data, wherein each of the locations for saving accumulated data corresponds to one clock cycle in the system timing;
the reading unit (2023) is further configured for respectively reading data saved at locations corresponding to the even-ip RAM and the odd-ip RAM according to a type of a finger offset of the reconstructed data of the user finger with respect to the system timing;
the accumulating unit (2024) is further configured for performing aligned accumulation on the read data and the reconstructed data of the user finger to obtain an accumulated result corresponding to a location of the even-ip RAM or of the odd-ip RAM; and
the writing-back unit (2025) is further configured for writing the accumulated result back to the corresponding location of the even-ip RAM or of the odd-ip RAM corresponding to the system timing.

9. The device according to claim 8, wherein the aligned accumulation module (202) is further configured for: when a conflict occurs in accessing a RAM location during aligned accumulation for reconstructed data of two successive user fingers, acquiring an accumulated result corresponding to the conflicting RAM location from a location of the even-ip RAM or of the odd-ip RAM, or from a stage of an accumulating pipeline, or from a stage of a writing-back pipeline; and performing aligned accumulation on the accumulated result corresponding to the conflicting RAM location and reconstructed data of a current user finger.

## Patentansprüche

1. Verfahren zur fingerabgestimmten Akkumulation bei Entstörung, umfassend:
Empfangen rekonstruierter Daten eines Benutzerfingers (S101), wobei die rekonstruierten Daten des Benutzerfingers unter Verwendung von Finger-Offset-Informationen, die durch RAKE-Empfang erhalten werden, und Benutzersymbolen erhalten werden, die in Kombination mit einer Kanalschätzung korrekt demoduliert und decodiert werden, und wiederhergestellte Amplituden- und Phaseninformationen des Benutzerfingers aufweisen, die nach Fortpflanzung in einem drahtlosen Kanal an einer Empfängerseite ankommen; und
Durchführen von abgestimmter Akkumulation an den rekonstruierten Daten des Benutzerfingers durch Abstimmen einer Benutzerzeitsteuerung auf eine Systemzeitsteuerung (S102) ursprünglicher Antennendaten, derart dass akkumulierte Daten von den ursprünglichen Antennendaten subtrahiert werden, um die Wirkung bekannter Benutzerfinger auf einen unbekannten, noch korrekt zu demodulierenden und decodierenden Benutzerfinger aufzuheben,
wobei Daten mehrerer Benutzerfinger verschiedene Finger-Offsets in Bezug auf die Systemzeitsteuerung aufweisen, die von verschiedenen Verzögerungen von Reflexions- oder Beugungspfaden abhängen,
wobei die abgestimmte Akkumulation an den rekonstruierten Daten des Benutzerfingers durch Pipelining durchgeführt wird,
wobei eine konfigurierbare Korrelationslänge ip in einem Taktzyklus abgestimmt wird,
**dadurch gekennzeichnet, dass**
der Schritt des Durchführens von abgestimmter Akkumulation an den rekonstruierten Daten des Benutzerfingers durch Abstimmen einer Benutzerzeitsteuerung auf eine Systemzeitsteuerung umfasst:
Erfassen eines Finger-Offsets der rekonstruierten Daten des Benutzerfingers in Bezug auf die Systemzeitsteuerung (S1021);
Konstruieren abgestimmter rekonstruierter Daten des Benutzerfingers durch: Füllen einer Länge gleich dem Finger-Offset, der modulo ein ip ist, unmittelbar vor den rekonstruierten Daten des Benutzerfingers, mit Nullen, und Füllen einer Länge gleich einer ip minus des Finger-Offsets, der ebenfalls modulo ein ip ist, unmittelbar nach den rekonstruierten Daten des Benutzerfingers, mit Nullen (S1022);
Auslesen von Daten, die an einem Speicherort gespeichert sind, welcher der Systemzeitsteuerung entspricht, gemäß den rekonstruierten Daten des Benutzerfingers (S1023);
Hinzufügen der abgestimmten rekonstruierten Daten des Benutzerfingers zu den ausgelesenen Daten, um akkumulierte Daten zu erhalten (S1024); und
Schreiben der akkumulierten Daten zurück in den Speicherort, welcher der Systemzeitsteuerung entspricht (S1025).

2. Verfahren nach Anspruch 1, ferner umfassend:
Verhindern eines Konflikts bei fingerabgestimmter Akkumulation durch auf höherer Ebene gesteuerte Zeitplanung.

3. Verfahren nach Anspruch 1, wobei der Schritt des Durchführens von abgestimmter Akkumulation an den rekonstruierten Daten des Benutzerfingers durch Abstimmen einer Benutzerzeitsteuerung auf eine Systemzeitsteuerung umfasst:
Konstruieren eines Speicherbereichs, welcher der Systemzeitsteuerung entspricht und einen RAM gerader ips und einen RAM ungerader ips enthält, wobei der RAM gerader ips und der RAM ungerader ips jeweils mehrere Speicherorte zum Speichern akkumulierter Daten umfassen, wobei jeder der Speicherorte zum Speichern akkumulierter Daten einem Taktzyklus bei der Systemzeitsteuerung entspricht (S1026);
jeweiliges Auslesen von Daten an Speicherorten, die dem RAM gerader ips und dem RAM ungerader ips entsprechen, gemäß einem Typ eines Finger-Offsets der rekonstruierten Daten des Benutzerfingers in Bezug auf die Systemzeitsteuerung (S1027);
Durchführen von abgestimmter Akkumulation an den ausgelesenen Daten und den rekonstruierten Daten des Benutzerfingers, um ein akkumuliertes Ergebnis zu erhalten, das einem Speicherort des RAMs gerader ips oder des RAMs ungerader ips entspricht (S1028); und
Schreiben des akkumulierten Ergebnisses zurück in den entsprechenden Speicherort des RAMs gerader ips oder des RAMs ungerader ips, welcher der Systemzeitsteuerung entspricht (S1029).

4. Verfahren nach Anspruch 3, wobei der Schritt des Durchführens von abgestimmter Akkumulation an den rekonstruierten Daten des Benutzerfingers durch Abstimmen einer Benutzerzeitsteuerung auf eine Systemzeitsteuerung ferner umfasst:
Abrufen, wenn ein Konflikt beim Zugreifen auf einen RAM-Speicherort während der abgestimmten Akkumulation für rekonstruierte Daten von zwei aufeinanderfolgenden Benutzerfingern auftritt, eines akkumulierten Ergebnisses, das dem in Konflikt stehenden RAM-Speicherort entspricht, aus einem Speicherort des RAMs gerader ips oder des RAMs ungerader ips oder aus einer Phase einer Akkumulations-Pipeline oder aus einer Phase einer Zurückschreib-Pipeline; und Durchführen von abgestimmter Akkumulation am akkumulierten Ergebnis, das dem in Konflikt stehenden RAM-Speicherort und den rekonstruierten Daten eines aktuellen Benutzerfingers entspricht.

5. Verfahren nach Anspruch 3 oder 4, wobei der Typ des Finger-Offsets der rekonstruierten Daten des Benutzerfingers in Bezug auf die Systemzeitsteuerung umfasst: einen Finger-Offset, der in ip [2n, 2n + 1) fällt, in Bezug auf die Systemzeitsteuerung, oder einen Finger-Offset, der in ip [2n + 1, 2n + 2) fällt, in Bezug auf die Systemzeitsteuerung, wobei n eine ganze Zahl ist.

6. Vorrichtung zur fingerabgestimmten Akkumulation bei Entstörung, umfassend ein Datenempfangsmodul (201) und ein Akkumulationsabstimmungsmodul (202), wobei
das Datenempfangsmodul (201) zum Empfangen rekonstruierter Daten eines Benutzerfingers konfiguriert ist, wobei die rekonstruierten Daten des Benutzerfingers unter Verwendung von Finger-Offset-Informationen, die durch RAKE-Empfang erhalten werden, und Benutzersymbolen erhalten werden, die in Kombination mit einer Kanalschätzung korrekt demoduliert und decodiert werden, und wiederhergestellte Amplituden- und Phaseninformationen des Benutzerfingers aufweisen, die nach Fortpflanzung in einem drahtlosen Kanal an einer Empfängerseite ankommen; und
das Akkumulationsabstimmungsmodul (202) so konfiguriert ist, dass es abgestimmte Akkumulation an den rekonstruierten Daten des Benutzerfingers durch Abstimmen einer Benutzerzeitsteuerung auf eine Systemzeitsteuerung ursprünglicher Antennendaten durchführt, derart dass akkumulierte Daten von den ursprünglichen Antennendaten subtrahiert werden, um die Wirkung bekannter Benutzerfinger auf einen unbekannten, noch korrekt zu demodulierenden und decodierenden Benutzerfinger aufzuheben,
wobei Daten mehrerer Benutzerfinger verschiedene Finger-Offsets in Bezug auf die Systemzeitsteuerung aufweisen, die von verschiedenen Verzögerungen von Reflexions- oder Beugungspfaden abhängen,
wobei das Akkumulationsabstimmungsmodul (202) ferner so konfiguriert ist, dass es die abgestimmte Akkumulation an den rekonstruierten Daten des Benutzerfingers durch Pipelining durchführt,
wobei eine konfigurierbare Korrelationslänge ip in einem Taktzyklus abgestimmt wird,
**dadurch gekennzeichnet, dass**
das Akkumulationsabstimmungsmodul (202) eine Erfassungseinheit (2021), eine Konstruktionseinheit (2022), eine Leseeinheit (2023), eine Akkumulationseinheit (2024) und eine Rückschreibeinheit (2025) umfasst, wobei
die Erfassungseinheit (2021) zum Erfassen eines Finger-Offsets der rekonstruierten Daten des Benutzerfingers in Bezug auf die Systemzeitsteuerung konfiguriert ist;
die Konstruktionseinheit (2022) so konfiguriert ist, dass sie abgestimmte rekonstruierte Daten des Benutzerfingers konstruiert durch: Füllen einer Länge gleich dem Finger-Offset, der modulo ein ip ist, unmittelbar vor den rekonstruierten Daten des Benutzerfingers, mit Nullen, und Füllen einer Länge gleich einer ip minus des Finger-Offsets, der ebenfalls modulo ein ip ist, unmittelbar nach den rekonstruierten Daten des Benutzerfingers, mit Nullen;
die Leseeinheit (2023) so konfiguriert ist, dass sie Daten, die an einem Speicherort gespeichert sind, welcher der Systemzeitsteuerung entspricht, gemäß den rekonstruierten Daten des Benutzerfingers ausliest;
die Akkumulationseinheit (2024) so konfiguriert ist, dass sie die abgestimmten rekonstruierten Daten des Benutzerfingers zu den ausgelesenen Daten hinzufügt, um akkumulierte Daten zu erhalten; und
die Rückschreibeinheit (2025) so konfiguriert ist, dass sie die akkumulierten Daten in den Speicher zurückschreibt, welcher der Systemzeitsteuerung entspricht.

7. Vorrichtung nach Anspruch 6, wobei das Akkumulationsabstimmungsmodul (202) ferner zum Verhindern eines Konflikts bei fingerabgestimmter Akkumulation durch Zeitplanung auf höherer Ebene konfiguriert ist.

8. Vorrichtung nach Anspruch 6, wobei
die Konstruktionseinheit (2022) ferner so konfiguriert ist, dass sie einen Speicherbereich konstruiert, welcher der Systemzeitsteuerung entspricht und einen RAM gerader ips und einen RAM ungerader ips enthält, wobei der RAM gerader ips und der RAM ungerader ips jeweils mehrere Speicherorte zum Speichern akkumulierter Daten umfassen, wobei jeder der Speicherorte zum Speichern akkumulierter Daten einem Taktzyklus bei der Systemzeitsteuerung entspricht;
die Leseeinheit (2023) ferner so konfiguriert ist, dass sie jeweils Daten an Speicherorten, die dem RAM gerader ips und dem RAM ungerader ips entsprechen, gemäß einem Typ eines Finger-Offsets der rekonstruierten Daten des Benutzerfingers in Bezug auf die Systemzeitsteuerung ausliest;
die Akkumulationseinheit (2024) ferner so konfiguriert ist, dass sie abgestimmte Akkumulation an den ausgelesenen Daten und den rekonstruierten Daten des Benutzerfingers durchführt, um ein akkumuliertes Ergebnis zu erhalten, das einem Speicherort des RAMs gerader ips oder des RAMs ungerader ips entspricht; und
die Rückschreibeinheit (2025) ferner so konfiguriert ist, dass sie das akkumulierte Ergebnis in den entsprechenden Speicherort des RAMs gerader ips oder des RAMs ungerader ips zurückschreibt, welcher der Systemzeitsteuerung entspricht.

9. Vorrichtung nach Anspruch 8, wobei die Akkumulationsabstimmungseinheit (202) ferner konfiguriert ist zum: Abrufen, wenn ein Konflikt beim Zugreifen auf einen RAM-Speicherort während der abgestimmten Akkumulation für rekonstruierte Daten von zwei aufeinanderfolgenden Benutzerfingern auftritt, eines akkumulierten Ergebnisses, das dem in Konflikt stehenden RAM-Speicherort entspricht, aus einem Speicherort des RAMs gerader ips oder des RAMs ungerader ips oder aus einer Phase einer Akkumulations-Pipeline oder aus einer Phase einer Rückschreib-Pipeline; und Durchführen von abgestimmter Akkumulation am akkumulierten Ergebnis, das dem in Konflikt stehenden RAM-Speicherort und den rekonstruierten Daten eines aktuellen Benutzerfingers entspricht.

## Revendications

1. Procédé d'accumulation alignée sur les sous-récepteurs, appelés ici « doigts », dans le cadre d'une annulation de brouillage, comprenant les étapes ci-dessus consistant à :
recevoir des données reconstruites d'un doigt d'utilisateur (S101), dans lequel les données reconstruites du doigt d'utilisateur sont obtenues en faisant appel à des informations de décalage de doigt, obtenues par l'intermédiaire d'une réception RAKE, et à des symboles d'utilisateur correctement démodulés et décodés en combinaison avec une estimation de canal, et présentent des informations d'amplitude et de phase récupérées du doigt d'utilisateur arrivant sur un côté de récepteur après propagation dans un canal radio ; et
mettre en oeuvre une accumulation alignée sur les données reconstruites du doigt d'utilisateur, en alignant une temporisation d'utilisateur sur une temporisation de système (S102) des données d'antenne d'origine, de sorte que des données accumulées sont soustraites des données d'antenne d'origine en vue d'annuler l'impact de doigts d'utilisateur connus sur un doigt d'utilisateur inconnu qui doit encore être démodulé et décodé correctement ;
où des données de multiples doigts d'utilisateur présentent différents décalages de doigts par rapport à la temporisation de système en fonction de différents retards de trajets de réflexion ou de diffraction ;
dans lequel l'accumulation alignée est mise en oeuvre sur les données reconstruites du doigt d'utilisateur par le biais d'une mise en pipeline ;
dans lequel une longueur de corrélation configurable, « ip », est alignée dans un cycle d'horloge, **caractérisé en ce que** l'étape consistant à mettre en oeuvre une accumulation alignée sur les données reconstruites du doigt d'utilisateur en alignant une temporisation d'utilisateur sur une temporisation de système comprend les étapes ci-dessous consistant à :
acquérir un décalage de doigt des données reconstruites du doigt d'utilisateur par rapport à la temporisation de système (S1021) ;
construire des données reconstruites alignées du doigt d'utilisateur en mettant en oeuvre : un remplissage par des zéros d'une longueur égale au décalage de doigt, à savoir « une longueur ip modulo un », juste devant les données reconstruites du doigt d'utilisateur, et un remplissage par des zéros d'une longueur égale à une longueur « ip » moins le décalage de doigt, à savoir également « une longueur ip modulo un », juste derrière les données reconstruites du doigt d'utilisateur (S1022) ;
lire des données enregistrées à un emplacement correspondant à la temporisation de système selon les données reconstruites alignées du doigt d'utilisateur (S1023) ;
ajouter les données reconstruites alignées du doigt d'utilisateur aux données lues, pour obtenir des données accumulées (S1024) ; et
récrire les données accumulées à l'emplacement correspondant à la temporisation de système (S1025).

2. Procédé selon la revendication 1, comprenant en outre l'étape ci-dessous consistant à :
prévenir un conflit dans l'accumulation alignée sur les doigts par le biais d'un ordonnancement commandé de niveau supérieur.

3. Procédé selon la revendication 1, dans lequel l'étape consistant à mettre en oeuvre une accumulation alignée sur les données reconstruites du doigt d'utilisateur en alignant une temporisation d'utilisateur sur une temporisation de système comprend les étapes ci-dessous consistant à :
construire un espace de mémoire correspondant à la temporisation de système et contenant une mémoire RAM de longueur « ip » paire et une mémoire RAM de longueur « ip » impaire, dans lequel la mémoire RAM de longueur « ip » paire et la mémoire RAM de longueur « ip » impaire comprennent respectivement de multiples emplacements en vue d'enregistrer des données accumulées, dans lequel chacun des emplacements pour enregistrer les données accumulées correspond à un cycle d'horloge dans la temporisation de système (S1026) ;
lire respectivement des données enregistrées à des emplacements correspondant à la mémoire RAM de longueur « ip » paire et à la mémoire RAM de longueur « ip » impaire selon un type de décalage de doigt des données reconstruites du doigt d'utilisateur par rapport à la temporisation de système (S1027) ;
mettre en oeuvre une accumulation alignée sur les données lues et les données reconstruites du doigt d'utilisateur en vue d'obtenir un résultat accumulé correspondant à un emplacement de la mémoire RAM de longueur « ip » paire ou de la mémoire RAM de longueur « ip » impaire (S1028) ; et
récrire le résultat accumulé à l'emplacement correspondant de la mémoire RAM de longueur « ip » paire ou de la mémoire RAM de longueur « ip » impaire correspondant à la temporisation de système (S1029).

4. Procédé selon la revendication 3, dans lequel l'étape consistant à mettre en oeuvre une accumulation alignée sur les données reconstruites du doigt d'utilisateur en alignant une temporisation d'utilisateur sur une temporisation de système comprend en outre les étapes ci-dessous consistant à :
lorsqu'un conflit se produit lors de l'accès à un emplacement de mémoire RAM pendant une accumulation alignée pour des données reconstruites de deux doigts d'utilisateur successifs, acquérir un résultat accumulé correspondant à l'emplacement de mémoire RAM en conflit à partir d'un emplacement de la mémoire RAM de longueur « ip » paire ou de la mémoire RAM de longueur « ip » impaire, ou d'un étage d'un pipeline d'accumulation, ou d'un étage de pipeline de réécriture ; et mettre en oeuvre une accumulation alignée sur le résultat accumulé correspondant à l'emplacement de mémoire RAM en conflit et aux données reconstruites d'un doigt d'utilisateur actuel.

5. Procédé selon la revendication 3 ou 4, dans lequel le type de décalage de doigt des données reconstruites du doigt d'utilisateur par rapport à la temporisation de système comprend : un décalage de doigt relevant de la longueur ip [2n, 2n+1) par rapport à la temporisation de système, ou un décalage de doigt relevant de la longueur ip [2n+1, 2n+2) par rapport à la temporisation de système, dans lequel « n » est un nombre entier.

6. Dispositif pour une accumulation alignée sur les sous-récepteurs, appelés ici « doigts », dans le cadre d'une annulation de brouillage, comprenant :
un module de réception de données (201) et un module d'accumulation alignée (202), dans lequel :
le module de réception de données (201) est configuré de manière à recevoir des données reconstruites d'un doigt d'utilisateur, dans lequel les données reconstruites du doigt d'utilisateur sont obtenues en faisant appel à des informations de décalage de doigt, obtenues par l'intermédiaire d'une réception RAKE, et à des symboles d'utilisateur correctement démodulés et décodés en combinaison avec une estimation de canal, et présentent des informations d'amplitude et de phase récupérées du doigt d'utilisateur arrivant sur un côté de récepteur après propagation dans un canal radio ; et
le module d'accumulation alignée (202) est configuré de manière à mettre en oeuvre une accumulation alignée sur les données reconstruites du doigt d'utilisateur, en alignant une temporisation d'utilisateur sur une temporisation de système des données d'antenne d'origine, de sorte que des données accumulées sont soustraites des données d'antenne d'origine en vue d'annuler l'impact de doigts d'utilisateur connus sur un doigt d'utilisateur inconnu qui doit encore être démodulé et décodé correctement ;
où des données de multiples doigts d'utilisateur présentent différents décalages de doigts par rapport à la temporisation de système en fonction de différents retards de trajets de réflexion ou de diffraction ;
dans lequel le module d'accumulation alignée (202) est en outre configuré de manière à mettre en oeuvre l'accumulation alignée sur les données reconstruites du doigt d'utilisateur par le biais d'une mise en pipeline ;
dans lequel une longueur de corrélation configurable, « ip », est alignée dans un cycle d'horloge,
**caractérisé en ce que** :
le module d'accumulation alignée (202) comprend une unité d'acquisition (2021), une unité de construction (2022), une unité de lecture (2023), une unité d'accumulation (2024) et une unité de réécriture (2025), dans lequel :
l'unité d'acquisition (2021) est configurée de manière à acquérir un décalage de doigt des données reconstruites du doigt d'utilisateur par rapport à la temporisation de système ;
l'unité de construction (2022) est configurée de manière à construire des données reconstruites alignées du doigt d'utilisateur en mettant en oeuvre : un remplissage par des zéros d'une longueur égale au décalage de doigt, à savoir « une longueur ip modulo un », juste devant les données reconstruites du doigt d'utilisateur, et un remplissage par des zéros d'une longueur égale à une longueur « ip » moins le décalage de doigt, à savoir également « une longueur ip modulo un », juste derrière les données reconstruites du doigt d'utilisateur ;
l'unité de lecture (2023) est configurée de manière à lire des données enregistrées à un emplacement correspondant à la temporisation de système selon les données reconstruites alignées du doigt d'utilisateur ;
l'unité d'accumulation (2024) est configurée de manière à ajouter les données reconstruites alignées du doigt d'utilisateur aux données lues, en vue d'obtenir des données accumulées ; et
l'unité de réécriture (2025) est configurée de manière à récrire les données accumulées à l'emplacement correspondant à la temporisation de système.

7. Dispositif selon la revendication 6, dans lequel le module d'accumulation alignée (202) est en outre configuré de manière à prévenir un conflit dans l'accumulation alignée sur les doigts par le biais d'un ordonnancement commandé de niveau supérieur.

8. Dispositif selon la revendication 6, dans lequel :
l'unité de construction (2022) est en outre configurée de manière à construire un espace de mémoire correspondant à la temporisation de système et contenant une mémoire RAM de longueur « ip » paire et une mémoire RAM de longueur « ip » impaire, dans lequel la mémoire RAM de longueur « ip » paire et la mémoire RAM de longueur « ip » impaire comprennent respectivement de multiples emplacements pour enregistrer des données accumulées, dans lequel chacun des emplacements pour enregistrer les données accumulées correspond à un cycle d'horloge dans la temporisation de système ;
l'unité de lecture (2023) est en outre configurée de manière à lire respectivement des données enregistrées à des emplacements correspondant à la mémoire RAM de longueur « ip » paire et à la mémoire RAM de longueur « ip » impaire selon un type de décalage de doigt des données reconstruites du doigt d'utilisateur par rapport à la temporisation de système ;
l'unité d'accumulation (2024) est en outre configurée de manière à mettre en oeuvre une accumulation alignée sur les données lues et les données reconstruites du doigt d'utilisateur en vue d'obtenir un résultat accumulé correspondant à un emplacement de la mémoire RAM de longueur « ip » paire ou de la mémoire RAM de longueur « ip » impaire ; et
l'unité de réécriture (2025) est en outre configurée de manière à récrire le résultat accumulé à l'emplacement correspondant de la mémoire RAM de longueur « ip » paire ou de la mémoire RAM de longueur « ip » impaire correspondant à la temporisation de système.

9. Dispositif selon la revendication 8, dans lequel le module d'accumulation alignée (202) est en outre configuré de manière à : lorsqu'un conflit se produit lors de l'accès à un emplacement de mémoire RAM pendant une accumulation alignée pour des données reconstruites de deux doigts d'utilisateur successifs, acquérir un résultat accumulé correspondant à l'emplacement de mémoire RAM en conflit à partir d'un emplacement de la mémoire RAM de longueur « ip » paire ou de la mémoire RAM de longueur « ip » impaire, ou d'un étage d'un pipeline d'accumulation, ou d'un étage de pipeline de réécriture ; et mettre en oeuvre une accumulation alignée sur le résultat accumulé correspondant à l'emplacement de mémoire RAM en conflit et aux données reconstruites d'un doigt d'utilisateur actuel.
